# EUROPÄISCHE PATENTSCHRIFT

(11) **EP 2 205 540 B1**
(45) Veröffentlichungstag und Bekanntmachung des Hinweises auf die Patenterteilung: **23.12.2015**
(21) Anmeldenummer: 08805199.0
(22) Anmeldetag: 09.10.2008
(51) Int. Cl.: C04B 41/00, C04B 41/88, C04B 41/89, C03B 5/43

(54) **PORÖSES FEUERFESTMATERIAL GEEIGNET ZUR GLASHERSTELLUNG, VERFAHREN ZU DESSEN HERSTELLUNG UND VERWENDUNGEN**
POROUS FIREPROOF MATERIAL SUITABLE FOR GLASS PRODUCTION, METHOD FOR THE PRODUCTION THEREOF, AND USES
MATÉRIAU RÉFRACTAIRE POREUX ADAPTÉ À LA FABRICATION DU VERRE, SON PROCÉDÉ DE FABRICATION ET SES UTILISATIONS

(30) Priorität: 17.10.2007 DE 102007049634
(43) Veröffentlichungstag der Anmeldung: 14.07.2010
(73) Patentinhaber: TU Bergakademie Freiberg, 09596 Freiberg (DE)
(72) Erfinder: HESSENKEMPER, Heiko, 09603 Grossschirma (DE)
(74) Vertreter: Eisenführ Speiser
(86) Internationale Anmeldenummer: PCT/EP2008/063571
(87) Internationale Veröffentlichungsnummer: WO 2009/050108

(56) Entgegenhaltungen:
- EP-A- 0 911 298
- WO-A-2007/131749
- AT-B- 247 535
- GB-A- 1 035 415

## Beschreibung

### Technisches Gebiet:

Die vorliegende Erfindung betrifft ein Verfahren zur Herstellung eines porösen Feuerfestmaterials geeignet zur Glasherstellung, ein poröses Feuerfestmaterial herstellbar nach einem erfindungsgemäßen Verfahren und dessen Verwendung bei der Glasherstellung bzw. zur Reduzierung von Produktionsnachteilen bei der Glasherstellung sowie Verwendung von ein oder mehreren reduzierend wirkenden Substanzen zur Einstellung einer Sauerstoffsenke im Porenvolumen von Feuerfestmaterial geeignet zur Glasherstellung gemäß den unabhängigen Ansprüchen.

### Hintergrund der Erfindung:

Bei porösen Feuerfestmaterialien (Schmelzaggregate) geeignet zur Glasherstellung treten beim Kontakt mit einer Glasschmelze üblicherweise verschiedene Probleme auf. Zum einen ist die Korrosionsrate der Oberfläche des Feuerfestmaterials direkt proportional zur Kontaktfläche mit der Glasschmelze, so dass ein Eindringen der Schmelze in die meist offene Porosität des Feuerfestmaterials eine Erhöhung der Korrosion zur Folge hat. Neben dieser Verkürzung der Lebensdauer des Schmelzaggregates kann darüber hinaus Feuerfestmaterial auf der Oberfläche zum Porenvolumen (an)gelöst werden, das sich dann mit der in die Poren eindringenden Schmelze vermischt und so als unerwünschte Begleiterscheinung zu Produktionsstörungen, z. B. zu Schlieren bei der Glasproduktion, führen kann. Des Weiteren kann beim Eindringen der Schmelze in das Porenvolumen des Feuerfestmaterials die dort befindliche Gasphase zumindest teilweise in die Glasschmelze aufgenommen werden, was beispielsweise zum Einschluss von Blasen und somit zu weiteren Produktionsstörungen in der Glasherstellung führen kann [Glastechnische Fabrikationsfehler, Jebsen-Marwedel, R. Brückner: Springer-Verlag 1980, Seite 263].

Um nun die Korrosionsbeständigkeit von Feuerfestmaterialien bei der Glasherstellung zu verbessern, kann die Oberfläche des Feuerfestmaterials durch den Aufbau resistenterer Schichten [US 2003/0104196 und EP 0 911 298] bzw. durch Beschichtung mit Platinmetallen [GB 21 1 ,530 und WO 99/23050] veredelt werden. Nachteilig hieran ist einerseits der hohe Aufwand für die Oberflächenveredlung und andererseits die herabgesetzte Korrosionsbeständigkeit, sobald die jeweilige Schicht abgebaut ist.

In US 3,670,061 wird ein Verfahren zur Verbesserung der Korrosionsbeständigkeit von Feuerfestmaterialien beschrieben, wobei das Feuerfestmaterial geschmolzen wird und in diese Schmelze gezielt trockene Gase eingeleitet werden, um eine verringerte Porosität und eine damit einhergehende verbesserte Korrosionsbeständigkeit des Feuerfestmaterials herbeizuführen.

In DE 23 11 306 wird ein Verfahren zur Erhöhung der Haltbarkeit eines feuerfesten Mauerwerks metallurgischer Gefäße durch Einlagerung von Kohlenstoff während des laufenden Betriebes beschrieben, wobei ein fluider Kohlenstoffträger in situ von der unzerstörten Mauerwerksseite her in das Mauerwerk infiltriert wird.

AT 247535 B beschreibt ein Verfahren, bei dem man durch ein mit geschmolzenem Glas in Berührung stehendes poröses feuerfestes Material in Richtung der Berührungsfläche mit dem geschmolzenem Glas ein Kohlenstoff-haltiges Material hindurch diffundieren lässt, das im heißen Oberflächenbereich des Materials zersetzt wird. Dabei wird auf der Oberfläche des porösen feuerfesten Materials elementarer Kohlenstoff abgelagert, wobei eine sich erneuernde Kohlenstoffschicht gebildet wird. Bevorzugt lässt man eine Kohlenwasserstoffverhindung durch das poröse feuerfeste Material diffundieren.

In DE 199 36 292 wird ein feuerfester Formkörper für metallurgische Prozesse, ein entsprechender Versatz sowie deren Herstellungsverfahren beschrieben, wobei das feuerfeste Material eine hohe Beständigkeit gegenüber Schlacken mit den unterschiedlichsten Zusammensetzungen, insbesondere unterschiedlichen bzw. wechselnden pH-Werten bei gleichzeitiger unproblematischer Handhabung und unproblematischer Entsorgung aufweist. Dieses feuerfeste Material weist als Hauptkomponente ein mineralisches oxidisches Material auf, welches chemisch aus 80 bis 99% Al₂O₃ und 1 bis 20% CaO zusammengesetzt ist, wobei das mineralische oxidische Material des einsatzbereiten Steins ein Phasengemenge aus Cl-Al₂O₃, ß-Al₂O₃, Calciumhexaaluminat (CA₆) und Calciumdialuminat (CA₂) aufweist, die in Anteilen zwischen jeweils 2 und 50%, vorzugsweise zwischen jeweils 20 und 30% enthalten sein können.

Die technischen Aufgaben, die der vorliegenden Erfindung vornehmlich zugrunde liegen, bestehen darin, ein poröses Feuerfestmaterial geeignet zur Glasherstellung bereitzustellen, das eine verbesserte Korrosionsbeständigkeit gegenüber einer Glasschmelze aufweist, eine Verringerung von Produktionsnachteilen bei der Glasherstellung ermöglicht, insbesondere eine Reduzierung von Verunreinigungen im hergestellten Glas erlaubt, sowie kostengünstig und mit einfachen Mitteln herzustellen ist.

### Zusammenfassung der Erfindung:

Erfindungsgemäß wird die vorstehende Aufgabe durch die Gegenstände der unabhängigen Ansprüche gelöst.

Demzufolge werden ein oder mehrere der vorstehenden Aufgaben gelöst durch ein Verfahren zur Herstellung eines porösen Feuerfestmaterials geeignet zur Glasherstellung, dadurch gekennzeichnet, dass das Porenvolumen des porösen Feuerfestmaterials als Sauerstoffsenke eingestellt wird.

Im Sinne der vorliegenden Erfindung bedeutet der Begriff "Sauerstoffsenke", dass in das Feuerfestmaterial ein oder mehrere Substanzen eingebracht werden, die bei Temperaturen, die zur Glasherstellung üblicherweise eingesetzt werden, d.h. üblicherweise bis ca. 1600 °C (Glasherstellungstemperaturen), mit Sauerstoff zu einem Oxid reagieren, wobei die entsprechende Sauerstoffquelle üblicherweise (i) als Sauerstoffpartialdruck der Porenatmosphäre des Feuerfestmaterials und/oder (ii) als verfügbarer Sauerstoff, der in der in die Poren eindringenden Glasschmelze umfasst ist, vorliegt. Die entsprechenden Substanzen zur Einstellung der Sauerstoffsenke sind üblicherweise organischer oder anorganischer Natur.

Das nach dem vorstehend beschriebenen erfindungsgemäßen Herstellverfahren hergestellte poröse Feuerfestmaterial geeignet zur Glasherstellung sowie dessen Verwendung in der Glasherstellung bzw. zur Reduzierung von Produktionsnachteilen bei der Glasherstellung löst entsprechend ebenfalls ein oder mehrere der erfindungsgemäßen Aufgaben.

Eine weitere Ausgestaltung der vorliegenden Erfindung betrifft die Verwendung von ein oder mehreren reduzierend wirkenden Substanzen zur Einstellung einer Sauerstoffsenke im Porenvolumen von Feuerfestmaterial geeignet zur Glasherstellung, dadurch gekennzeichnet, dass die reduzierend wirkenden Substanzen bei Glasherstellungstemperaturen geeignet sind, mit Sauerstoff zu einem Oxid zu reagieren.

Bevorzugte Ausgestaltungen werden in den abhängigen Ansprüchen sowie nachfolgend beschrieben. Die bevorzugten Ausgestaltungen sind, sofern sinnvoll, untereinander kombinierbar.

### Kurze Figurenbeschreibung:

Figur 1 zeigt einen erfindungsgemäß mit Formiergas (5 Vol.-% H₂) behandelten Al₂O₃-reichen Leichtstein mit hoher offener Porosität, der in eine Grünglasschmelze getaucht wurde.
Figur 2 zeigt einen nicht erfindungsgemäß behandelten Al₂O₃-reichen Leichtstein mit hoher offener Porosität, der in eine Grünglasschmelze getaucht wurde.

### Detaillierte Beschreibung der Erfindung:

Die vorliegende Erfindung beruht auf der Erkenntnis, dass durch das erfindungsgemäße Einstellen einer Sauerstoffsenke in dem Porenvolumen des porösen Feuerfestmaterials geeignet zur Glasherstellung insbesondere die Oberflächenspannung des Feuerfestmaterials gegenüber einer oxidierend wirkenden Glasschmelze so verändert wird, dass bei der Glasherstellung ein Eindringen der Glasschmelze in das Porenvolumen des Feuerfestmaterials gegenüber nicht behandelten Porenoberflächen zumindest vermindert wird. Durch das Herabsetzen der Eindringfläche und/oder Eindringtiefe der Glasschmelze in das Porenvolumen des Feuerfestmaterials kann zum einen die Korrosion des porösen Feuerfestmaterials und zum anderen das Vermischen der Gasphase aus dem Porenvolumen des Feuerfestmaterials mit der Glasschmelze vermindert werden. Darüber hinaus wurde beobachtet, dass ein erfindungsgemäß hergestelltes poröses Feuerfestmaterial bei der Glasherstellung eine reduzierte Anlösung des Oberflächenmaterials des Feuerfestmaterials bewirken kann, so dass die Glasschmelze im Vergleich zu nicht behandelten Oberflächen nicht bzw. in einem geringeren Maße durch angelöstes Feuerfestmaterial verunreinigt wird. Folglich führt die Verwendung von erfindungsgemäß hergestelltem porösem Feuerfestmaterial bei der Glasherstellung zu geringeren Produktionsnachteilen.

Im Rahmen der vorliegenden Erfindung kann für das Herstellverfahren jedes poröse Feuerfestmaterial verwendet werden, dass für die Glasherstellung geeignet ist. Beispielhaft werden geeignete Materialien in US 2003/0104196, EP 0 911 298, GB 211,530, WO 99/23050, US 3,670,061 sowie den nachfolgenden Beispielen beschrieben. Bevorzugt wird das einzusetzende poröse Feuerfestmaterial ausgewählt aus der Gruppe bestehend aus Leichtstein mit hoher offener Porosität, vorzugsweise Al₂O₃-reicher Leichtstein; Schamottestein vorzugsweise mit 54.1 Ma-% SiO₂, 42,4 Ma-% Al₂O₃, 1,9 Ma-% Fe₂O₃ und 1,6 Ma-% (Na₂O und K₂O) (bevorzugt bereitgestellt durch die Firma Krause & Co. KG); Zirkonsilikatstein, vorzugsweise mit 32,0 Ma-% SiO₂, 65, Ma-% ZrO₂ (bevorzugt bereitgestellt durch die Firma Krause & Co. KG); Korund-Zirkon-Stein vorzugsweise mit 13,0 Ma-% SiO₂, 58,0 Ma-% Al₂O₃, 28 Ma-% ZrO₂ und 0,1 Ma-% Fe₂O₃ (bevorzugt bereitgestellt durch die Firma Krause & Co. KG).

Die erfindungsgemäße Einstellung der Sauerstoffsenke in dem Porenvolumen des Feuerfestmaterials kann in einer bevorzugten Ausgestaltung zum einen durch Befüllen des porösen Feuerfestmaterials mit einer oder mehreren reduzierend wirkenden Substanzen, die bei entsprechend geeigneten Temperaturen gegebenenfalls unter Anlegen von Unterdruck in das poröse Feuerfestmaterial eingebracht werden, vorgenommen werden. Diese reduzierend wirkenden Substanzen sind geeignet, bei Glasherstellungstemperaturen, bevorzugt bei Temperaturen von mehr als 200 °C, weiter bevorzugt von 700 °C bis 1600 °C, ganz besonders bevorzugt von 1000 °C bis 1500 °C mit Sauerstoff zu einem Oxid zu reagieren.

Im Sinne der vorliegenden Erfindung bedeutet der Ausdruck "Befüllen des porösen Feuerfestmaterials mit einer oder mehreren reduzierend wirkenden Substanzen" bzw. "Einbringen von einer oder mehreren reduzierend wirkenden Substanzen in das Porenvolumen des Feuerfestmaterials", dass das oder die reduzierend wirkenden Substanzen ein Teil oder das vollständige Porenvolumen des erfindungsgemäß einzusetzenden Feuerfestmaterials ersetzt. Hierbei wird erfindungsgemäß die Oberflächenspannung der Porenoberfläche des Feuerfestmaterials so verändert, dass die Glasschmelze nicht bzw. zu einem im Vergleich zur nicht behandelten Oberfläche geringeren Maße in die bzw. in einen Teil der Poren des Feuerfestmaterials eindringt. Üblicherweise werden die reduzierend wirkenden Substanzen über einen geeigneten Zeitraum, bevorzugt 1 bis 10 Stunden, weiter bevorzugt 2 bis 5 Stunden bei einer geeigneten Temperatur in das Porenvolumen des Feuerfestmaterials eingebracht. In einer weiteren bevorzugten Ausgestaltung kann die Temperatur hierzu erhöht werden, vorzugsweise auf mehr als 200 °C, weiter bevorzugt auf 500 °C bis 1200 °C, ganz besonders bevorzugt auf 700 °C bis 1000 °C.

Vorzugsweise können reduzierend wirkende organische Substanzen verwendet werden, weiter bevorzugt aus der Gruppe bestehend aus Ölen, Alkoholen, Metallalkoholaten und/oder Wachsen.

Metallalkoholate können zusätzlich zu den Oberflächenspannungsveränderungen der Poren des Feuerfestmaterials ebenfalls ein entsprechendes Reduktionspotential gegenüber der in das Porenvolumen eindringenden Glasschmelze aufweisen, welche ebenfalls ein Eindringen der Glasschmelze in das oder ein Teil des Porenvolumens reduziert.

Beispielsweise kann als Metallalkoholat ein Aluminiumalkoholat verwendet werden. Bevorzugt wird hierzu AlCl3 in Methanol oder Ethanol gelöst, wobei das Gewichtsverhältnis von AlCl₃ bezogen auf das Gesamtgewicht der Lösung bevorzugt 10 Gew.-% oder mehr beträgt. Das resultierende Aluminiumalkoholat kann bereits bei Raumtemperatur in die offene Porosität des Feuerfestmaterials eingebracht werden. Für die Einbringung des Metallalkoholates, bevorzugt Aluminiumalkoholates kann bereits ein In-Kontaktbringen von weniger als 1 Stunde ausreichen. Beim langsamen Erhitzen des in dieser Weise erfindungsgemäß behandelten Feuerfestmaterials können bereits im Rahmen der Aufheizphase der Glasherstellung die gewünschten Reaktionen auftreten, die insbesondere zu den gewünschten Oberflächenspannungsveränderungen und/oder Reduktionspotentialen gegenüber der in das Porenvolumen eindringenden Glasschmelze führen.

Alternativ oder kumulativ besteht eine weitere Möglichkeit zur Einstellung der Sauerstoffsenke darin, die Befüllung mit reduzierend wirkenden Gasen bzw. Gasgemischen (gasförmig bei Raumtemperatur), die z. B. H₂ und/oder CO₂, vorzugsweise H₂, weiter bevorzugt mit 5 Vol.-% H₂ (Formiergas) umfassen, vorzunehmen. Das Gas bzw. Gasgemisch wird üblicherweise in das Porenvolumen des Feuerfestmaterials eingesaugt bzw. eingepresst, um eine geeignete Gasatmosphäre, bevorzugt Formiergasatmosphäre, herzustellen. Zur Einstellung der geeigneten (Formier-)Gasatmosphäre wird das Gas bzw. Gasgemisch üblicherweise über einen geeigneten Zeitraum, bevorzugt 1 bis 10 Stunden, weiter bevorzugt 2 bis 5 Stunden bei einer geeigneten Temperatur in das Porenvolumen des Feuerfestmaterials eingebracht. In einer weiteren bevorzugten Ausgestaltung kann die Temperatur hierzu erhöht werden, vorzugsweise auf mehr als 200 °C, weiter bevorzugt auf 500 °C bis 1200 °C, ganz besonders bevorzugt auf 700 °C bis 1000 °C. Zur Konservierung dieser Gasatmosphäre können die Poren des Feuerfestmaterials mit einem geeigneten Verschlussmaterial, vorzugsweise (reduzierend wirkendem) Wachs bzw. Wachsgemisch verschlossen werden. Bei den Einsatztemperaturen des Feuerfestmateriales wirkt Wachs als das Verschlussmaterial zusätzlich selbst reduzierend.

Im laufenden Betrieb können die bei Raumtemperatur gasförmigen bzw. nicht-gasförmigen (flüssigen oder festen) reduzierend wirkenden Substanzen von außen durch geeignete Maßnahmen in die Poren des Feuerfestmaterials nachgeführt werden, um den Effekt, d. h. die Oberflächenspannungsveränderung des Feuerfestmaterials, über einen verlängerten Zeitraum aufrecht zu erhalten. Die Verwendung von extern angebrachten Druckkammern unter Verwendung von Rauchgas hätte des Weiteren zum Vorteil, dass parallel neben dieser Nachführungsfunktion auch Wärmeverluste vermindert werden könnten. Damit kann auch bei Dauerbetrieb das Eindringen von Glasschmelzen in das poröse Feuerfestmaterial (zumindest teilweise) unterbunden werden, was zu einer erheblichen Reduzierung der Korrosion und den damit verbundenen produktionstechnischen Nachteilen führen kann.

In einer weiteren alternativen oder kumulativen bevorzugten Ausgestaltung des erfindungsgemäßen Herstellverfahrens kann das Porenvolumen des porösen Feuerfestmaterials auch als Sauerstoffsenke eingestellt werden, indem es mit einer oder mehreren reduzierend wirkenden anorganischen Substanzen, die bei Glasherstellungstemperaturen, bevorzugt bei Temperaturen von mehr als 200 °C, weiter bevorzugt von 700 °C bis 1600 °C, ganz besonders bevorzugt von 1000 °C bis 1500 °C, mit Sauerstoff zu einem Oxid reagieren, versehen wird. Geeignete anorganische Substanzen können ausgewählt werden aus Metallen oder Metalllegierungen mit einem Schmelzpunkt kleiner oder gleich 1000 °C (niedrig schmelzende Metalle oder Metalllegierungen), bevorzugt, kleiner oder gleich 700 °C. In einer bevorzugten Ausgestaltung weisen diese Metalle oder Metalllegierungen ein Reduktionspotential gegenüber der in das Porenvolumen eindringenden Glasschmelze auf. In einer besonders bevorzugten Ausgestaltung hierzu wird schmelzflüssiges Aluminium (bei Temperaturen oberhalb oder gleich dem Schmelzpunkt des Aluminiums) oder Zinn (bei Temperaturen oberhalb oder gleich dem Schmelzpunkt des Zinns) in das Porenvolumen des Feuerfestmaterials eingebracht, um die Sauerstoffsenke einzustellen.

Im Sinne der vorliegenden Erfindung bedeutet der Ausdruck "Befüllen des porösen Feuerfestmaterials mit reduzierend wirkenden anorganischen Substanzen" bzw. "Einbringen von reduzierend wirkenden anorganischen Substanzen in das Porenvolumen des Feuerfestmaterials", dass reduzierend wirkende anorganische Substanzen, bevorzugt niedrig schmelzende Metalle oder Metalllegierungen, besonders bevorzugt schmelzflüssiges Aluminium oder Zinn, ein Teil oder das vollständige Porenvolumen des erfindungsgemäß einzusetzenden Feuerfestmaterials ersetzt. Hierbei wird zum einen die Oberflächenspannung der Porenoberfläche des Feuerfestmaterials so verändert, dass die Glasschmelze nicht bzw. zu einem im Vergleich zur nicht behandelten Oberfläche geringeren Maße in die bzw. in einen Teil der Poren des Feuerfestmaterials eindringt. Zusätzlich zu dem vorgenannten Effekt der Oberflächenspannungsveränderung der Porenoberfläche des Feuerfestmaterials tritt bei der Befüllung des Porenvolumens des erfindungsgemäß einzusetzenden Feuerfestmaterials mit reduzierend wirkenden anorganischen Substanzen, bevorzugt niedrig schmelzenden Metallen oder Metalllegierungen, besonders bevorzugt schmelzflüssigem Aluminium oder Zinn, der vorteilhafte Effekt auf, dass an der Kontaktfront zur oxidierenden Glasschmelze die reduzierend wirkenden anorganischen Substanzen zum jeweiligen Oxid, bevorzugt Aluminium zu Al₂O₃ oder Zinn zu SnO oxidiert werden und SiO₂ aus der Glasschmelze zu Si reduziert wird, wodurch eine zusätzliche Festkörpersperrschicht erzeugt wird, die das Eindringen der Glasschmelze in das bzw. ein Teil des Porenvolumens weiter vermindert.

Reduzierend wirkende Metalle oder Metalllegierungen werden üblicherweise unter reduzierenden Bedingungen erhitzt und in schmelzflüssigem Zustand in das oder ein Teil des Porenvolumens des Feuerfestmaterials eingebracht. Es finden in dem Porenvolumen die entsprechenden Reaktionen mit dem Restsauerstoff statt, wodurch zunächst ein Unterdruck erzeugt wird und ein Eindringen der Glasschmelze ermöglicht werden kann. An der Kontaktgrenze zur Glasschmelze können dann die weiteren Reaktionen, wie oben beschrieben, auftreten, die zu einer zusätzlichen Festkörpersperrschicht führen können.

Weitere erfindungsgemäße Ausgestaltungen werden im Folgenden dargestellt:
a) Verfahren zur Erhöhung der Korrosionsbeständigkeit von Feuerfestmaterialien, gekennzeichnet dadurch, dass das Porenvolumen des Feuerfestmaterials als Sauerstoffsenke eingestellt wird.
b) Verfahren nach Ausgestaltung a), gekennzeichnet dadurch, dass in das Porenvolumen des Feuerfestmaterials reduzierend wirkende Stoffe eingebracht werden.
c) Verfahren nach Ausgestaltung a) und b), gekennzeichnet dadurch, dass in das Porenvolumen des Feuerfestmaterials organische Substanzen eingebracht werden.
d) Verfahren nach Ausgestaltung a) bis c), gekennzeichnet dadurch, dass in das Porenvolumen des Feuerfestmaterials Öl, Alkohol und/oder Wachs eingebracht werden.
e) Verfahren nach Ausgestaltung a) und b) gekennzeichnet dadurch, dass in das Porenvolumen des Feuerfestmaterials reduzierend wirkende Gase eingebracht werden und das Feuerfestmaterial danach gegebenenfalls mit Wachs ummantelt wird.
f) Verfahren nach Ausgestaltung a), b) und e) gekennzeichnet dadurch, dass in das Porenvolumen des Feuerfestmaterials H₂ und/oder CO₂ eingebracht werden.
g) Verfahren nach Ausgestaltung a) und b), gekennzeichnet dadurch, dass der gasförmige bzw. flüssige reduzierend wirkende Stoff dem im Einsatz befindlichen Feuerfestmaterial von außen durch geeignete Maßnahmen nachgeführt wird.
h) Verfahren nach Ausgestaltung a) und b), gekennzeichnet dadurch, dass in das Porenvolumen des Feuerfestmaterials schmelzflüssiges Aluminium bei Temperaturen oberhalb des Aluminiumschmelzpunktes eingebracht wird.

### Ausführungsbeispiele:

Die vorliegende Erfindung wird im Folgenden durch Ausführungsbeispiele beschrieben, die jedoch den Schutzumfang der erfindungsgemäß beanspruchten Gegenstände gemäß unabhängiger Ansprüche nicht limitieren.

### Beispiel 1

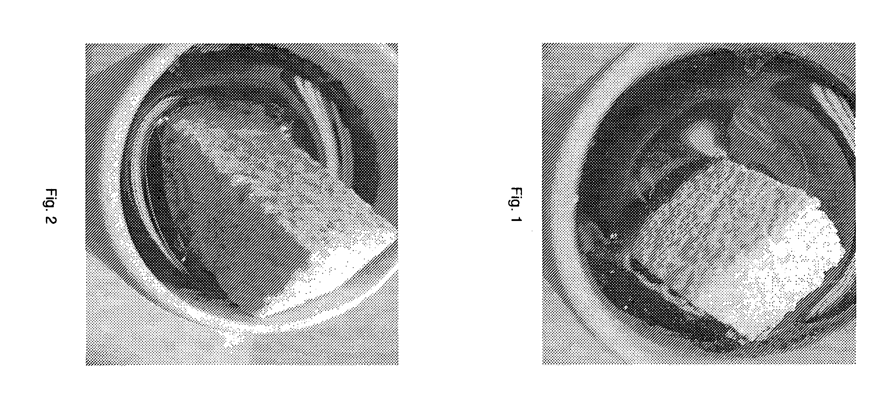

Ein Al₂O₃-reicher Leichtstein mit hoher offener Porosität wird mit Formiergas (5 Vol.-% H₂) als reduzierende Substanz befüllt (beaufschlagt). Zur Konservierung des Formiergases wird der Leichtstein mit Wachs verschlossen. Der auf diese Weise erfindungsgemäß vorbehandelte Stein wird 10 Minuten lang in eine Schmelze aus grünem Behälterglas mit einer Temperatur von 1300 °C getaucht und die Schmelze mit dem Stein danach einer natürlichen Ofenabkühlung unterworfen. Denselben Versuchsbedingungen wird ein unbehandelter Stein als Vergleichsprobe unterworfen. Im Ergebnis ist der vorbehandelte Stein (Figur 1) unbenetzt an der Dreizonengrenze (Randwinkel > 90°). Die Vergleichsprobe (Figur 2) ist an der Dreizonengrenze benetzt und durch Kapillarwirkung vollgesaugt mit Glasschmelze.

### Beispiel 2

Aus einem Schamottestein der Firma Krause & Co. KG mit den Herstellerangaben der Zusammensetzung laut Datenblatt 54.1 Ma-% SiO₂, 42,4 Ma-% Al₂O₃, 1,9 Ma-% Fe₂O₃ und 1,6 Ma-% (Na₂O und K₂O) wurden mittels Hohlbohrer Zylinder mit einem Durchmesser von 18 mm und einer Länge von 125 mm gebohrt. Die zylindrischen Probekörper wurden in eine Lage Aluminiumfolie (ca. 1g auf die ca. 71 cm² Probenfläche) gewickelt und unter Formiergasatmosphäre drei Stunden lang auf 710 °C erhitzt. Nach dieser erfindungsgemäßen Behandlung wurden eventuelle Rückstände von den Probekörperoberflächen entfernt und die Probe mittels statischem Fingertest auf Beständigkeit untersucht. Für den Fingertest wurden 100 g Weißglas der Zusammensetzung 73,12 Ma-% SiO₂, 1,23 Ma-% Al₂O₃, 12,75 Ma-% Na₂O 2,47 Ma-% MgO, 9,76 Ma-% CaO, 0,06 Ma-% Fe₂O₃, 0,04 Ma-% TiO₂ und 0,21 Ma-% SO₃ bei einer Temperatur von 1360 °C aufgeschmolzen. Nach einer Haltezeit von 4 Stunden bei dieser Temperatur wurden die zylindrischen Probekörper in die Schmelze (Eintauchtiefe 55 mm) gestellt und unter oxidierender Atmosphäre 20 Stunden bei einer Temperatur von 1360 °C gehalten. Danach wurden die Probekörper aus der Schmelze genommen und kontrolliert abgekühlt.

Als Vergleichsproben hierzu wurden unbehandelte zylindrische Probekörper dem statischen Fingertest für Weißglas, wie vorstehend beschrieben, unterworfen.

Es zeigte sich, dass es durch die erfindungsgemäße Behandlung des porösen Feuerfestmaterials zu einer Abnahme der Korrosionsfläche kam. Die Korrosionsbeständigkeit wurde um ca. 20 % erhöht.

### Beispiel 3

Aus einem Zirkonsilikatstein der Firma Krause & Co. KG mit den Herstellerangaben der Zusammensetzung laut Datenblatt 32,0 Ma-% SiO₂, 65, Ma-% ZrO₂, wurden mittels Hohlbohrer Zylinder mit einem Durchmesser von 18 mm und einer Länge von 125 mm gebohrt. Die zylindrischen Probekörper wurden in eine Lage Aluminiumfolie (ca. 1g auf die ca. 71 cm² Probenfläche) gewickelt und unter Formiergasatmosphäre drei Stunden lang auf 710 °C erhitzt. Nach dieser erfindungsgemäßen Behandlung wurden eventuelle Rückstände von den Probekörperoberflächen entfernt und die Probe mittels statischem Fingertest auf Beständigkeit untersucht. Für den Fingertest wurden 100 g Braunglas der Zusammensetzung 71,46 Ma-% SiO₂, 2,11 Ma-% Al₂O₃, 12,30 Ma-% Na₂O, 1,06 Ma-% MgO, 10,39 Ma-% CaO, 0,41 Ma-% Fe₂O₃, 0,07 Ma-% TiO₂ und 0,04 Ma-% SO₃ bei einer Temperatur von 1360 °C aufgeschmolzen. Nach einer Haltezeit von 4 Stunden bei dieser Temperatur wurden die zylindrischen Probekörper in die Schmelze (Eintauchtiefe 55 mm) gestellt und unter oxidierender Atmosphäre 20 Stunden bei einer Temperatur von 1360 °C gehalten. Danach wurden die Probekörper aus der Schmelze genommen und kontrolliert abgekühlt.

Als Vergleichsproben hierzu wurden unbehandelte zylindrische Probekörper dem statischen Fingertest für Braunglas, wie vorstehend beschrieben, unterworfen.

Es zeigte sich, dass es durch die erfindungsgemäße Behandlung des porösen Feuerfestmaterials zu einer Abnahme der Korrosionstiefe kam. Die Korrosionsbeständigkeit wurde um ca. 12 % erhöht.

### Beispiel 4

Aus einem Korund-Zirkon-Stein der Firma Krause & Co. KG mit den Herstellerangaben der Zusammensetzung laut Datenblatt 13,0 Ma-% SiO₂, 58,0 Ma-% Al₂O₃, 28 Ma-% ZrO₂ und 0,1 Ma-% Fe₂O₃ wurden mittels Hohlbohrer Zylinder mit einem Durchmesser von 18 mm und einer Länge von 125 mm gebohrt. Die zylindrischen Probekörper wurden in eine Lage Aluminiumfolie (ca. 1g auf die ca. 71 cm² Probenfläche) gewickelt und unter Formiergasatmosphäre drei Stunden lang auf 910 °C erhitzt. Nach dieser erfindungsgemäßen Behandlung wurden eventuelle Rückstände von den Probekörperoberflächen entfernt und die Probe mittels dynamischen Fingertest auf Beständigkeit untersucht. Die Proben wurden dabei in eine Korundhalterung eingespannt und mit dem Glas aus Beispiel 2 aufgeheizt. Der Ofen wurde dabei mit 7,44 K/min bis auf 1475 °C aufgeheizt. Nach 15 Minuten Haltezeit wurde die Probe in die Schmelze eingelassen. Anschließend wurde mit Hilfe eines Motors eine Umdrehungsgeschwindigkeit von 65 U/min realisiert. Es erfolgte nun 24 Stunden ein dynamischer Korrosionsangriff in reduzierter Atmosphäre (ca. 65 l N₂/h). Die reduzierte Atmosphäre wurde eingestellt, damit die behandelten Proben während des Aufheizvorganges nicht aufoxidieren. Nach 24 Stunden wurde die Probe mittels Halterung in den Ausgangszustand gebracht. Die Probe tropfte nun 15 min über der Schmelze ab, bevor der Ofen die Temperatur automatisch herunter regelte und somit die Probe kontrolliert abkühlte.

Als Vergleichsproben hierzu wurden unbehandelte zylindrische Probekörper dem dynamischen Fingertest für Weißglas, wie vorstehend beschrieben, unterworfen.

An den Probekörpern wurden die Korrosionsbereiche an der Glasspiegellinie fotografiert um die stärkste Abnahme zu charakterisieren. Dabei zeigte sich, dass infolge der erfindungsgemäßen Behandlung der Probekörper bei 910 °C die Korrosionsbeständigkeit um 12 % erhöht werden konnte.

## Patentansprüche

1. Verfahren zur Herstellung eines porösen Feuerfestmaterials, geeignet zur Glasherstellung in Kontakt mit einer Glasschmelze, aufweisend ein Porenvolumen, in welches ein oder mehrere reduzierend wirkende Substanzen, die bei Glasherstellungstemperaturen mit Sauerstoff zu einem Oxid reagieren, eingebracht werden, **dadurch gekennzeichnet, dass**
- als reduziert wirkende Substanz schmelzflüssiges Aluminium bei Temperaturen oberhalb oder gleich dem Schmelzpunkt des Aluminiums eingebracht wird oder
- als reduzierend wirkende Substanz schmelzflüssiges Zinn bei Temperaturen oberhalb oder gleich dem Schmelzpunkt des Zinns eingebracht wird.

2. Verfahren gemäß Anspruch 1, **dadurch gekennzeichnet, dass** der oder die reduzierend wirkenden Substanzen den im Einsatz befindlichen Feuerfestmaterial von außen durch geeignete Maßnahmen nachgeführt werden.

3. Poröses Feuerfestmaterial, geeignet zur Glasherstellung in Kontakt mit einer Glasschmelze, aufweisend ein Porenvolumen, in welches ein oder mehrere reduzierend wirkende Substanzen, die bei Glasherstellungstemperaturen mit Sauerstoff zu einem Oxid reagieren, eingebracht sind, **dadurch gekennzeichnet, dass** als reduzierend wirkende Substanz Aluminium oder Zinn eingebracht ist.

4. Verwendung des Feuerfestmaterials nach einem der Ansprüche 1 bis 3 zur Glasherstellung in Kontakt mit einer Glasschmelze.

5. Schmelzvorrichtung aufweisend ein poröses Feuerfestmaterial, das zur Glasherstellung in Kontakt mit einer Glasschmelze steht, **dadurch gekennzeichnet, dass** das Porenvolumen des Feuerfestmaterials als Sauerstoffsenke dadurch eingestellt ist, dass ein oder mehrere reduzierend wirkende Substanzen, die bei Glasherstellungstemperaturen mit Sauerstoff zu einem Oxid reagieren in das Porenvolumen des Feuerfestmaterials eingebracht sind und mindestens einen Teil des Porenvolumens ersetzen wobei als reduzierend wirkende anorganische Substanz ein oder mehrere Metalle oder Metalllegierungen mit einem Schmelzpunkt von kleiner gleich 1.000 °C eingebracht sind.

6. Schmelzvorrichtung gemäß Anspruch 5, **dadurch gekennzeichnet, dass** das oder die reduzierend wirkenden Substanzen anorganische und/oder organische Substanzen enthält.

7. Schmelzvorrichtung gemäß Anspruch 6, **dadurch gekennzeichnet, dass** das oder die reduzierend wirkenden organischen Substanzen, Substanzen ausgewählt aus der Gruppe bestehend aus: Öl, Alkohol, Metallakoholaten und/oder Wachs, enthält.

8. Schmelzvorrichtung nach Anspruch 5, **dadurch gekennzeichnet, dass** das Metall Aluminium oder Zinn ist.

## Claims

1. Method for producing a porous refractory material suitable for the manufacture of glass in contact with a glass melt, comprising a pore volume into which one or more substances with a reducing effect are introduced which react with oxygen to form an oxide at glass production temperatures, **characterised in that**
- molten aluminium is introduced, as a substance with a reducing effect, at temperatures above or equal to the melting point of the aluminium, or
- molten tin is introduced, as a substance with a reducing effect, at temperatures above or equal to the melting point of the tin.

2. Method according to claim 1, **characterised in that** the refractory material being used is or are introduced from outside by suitable means after the substance(s) with a reducing effect.

3. Porous refractory material suitable for the manufacture of glass in contact with a glass melt, comprising a pore volume into which one or more substances with a reducing effect are introduced which react with oxygen to form an oxide at glass production temperatures, **characterised in that** aluminium or tin is introduced as a substance with a reducing effect.

4. Use of the refractory material according to one of claims 1 to 3 for the manufacture of glass in contact with a glass melt.

5. Melting apparatus comprising a porous refractory material which is in contact with a glass melt for the manufacture of glass, **characterised in that** the pore volume of the refractory material as an oxygen sink is adjusted by introducing into the pore volume of the refractory material one or more substances with a reducing effect which react with oxygen at glass production temperatures to form an oxide and replace at least part of the pore volume, wherein one or more metals or metal alloys with a melting point of less than or equal to 1,000°C are introduced as an inorganic substance with a reducing effect.

6. Melting apparatus according to claim 5, **characterised in that** the substance or substances with a reducing effect contain(s) inorganic and/or organic substances.

7. Melting apparatus according to claim 6, **characterised in that** the organic substance or substances with a reducing effect contain(s) substances selected from the group comprising oil, alcohol, metal alkoxides and/or wax.

8. Melting apparatus according to claim 5, **characterised in that** the metal is aluminium or tin.

## Revendications

1. Procédé pour la production d'un matériau réfractaire poreux, convenant pour la fabrication de verre en contact avec une masse de verre fondu, présentant un volume de pores, dans lequel sont utilisées une ou plusieurs substances à activité réductrice qui, à la température de fabrication du verre réagissent avec l'oxygène pour former un oxyde, ce procédé étant **caractérisé en ce que**:
comme substance à activité réductrice on utilise de l'aluminium fondu à une température supérieure ou égale à celle du point de fusion de l'aluminium,
ou
comme substance à activité réductrice on utilise de l'étain fondu à une température supérieure ou égale à celle du point de fusion de l'étain.

2. Procédé selon la revendication 1, **caractérisé en ce que** la ou les substances à activité réductrice présentes qui sont utilisées dans le matériau réfractaire sont ajoutées depuis l'extérieur par des mesures appropriées.

3. Matériau réfractaire poreux, convenant pour la fabrication de verre en contact avec une masse de verre fondu, présentant un volume de pores, dans lequel sont introduites une ou plusieurs substances réductrices, qui, à la température de fabrication du verre réagissent avec l'oxygène pour former un oxyde, **caractérisé en ce que**, comme substance à activité réductrice est utilisé de l'aluminium ou de l'étain.

4. Application du matériau réfractaire selon une des revendications 1 à 3 pour la fabrication de verre en contact avec une masse de verre fondu.

5. Dispositif de fusion présentant un matériau réfractaire poreux, destiné à être utilisé pour la fabrication de verre en contact avec une masse de verre fondu, **caractérisé en ce que** le volume de pores du matériau réfractaire prévu pour constituer un puits d'oxygène, **en ce que** une ou plusieurs substances à activité réductrice, qui à la température de fabrication du verre réagissent avec l'oxygène pour former un oxyde, sont introduites dans le volume de pores du matériau réfractaire et se substituent à au moins une parte du volume de pores, dispositif dans lequel en tant que substance inorganique à activité réductrice sont utilisés un ou plusieurs métaux ou alliages dont le point de fusion est inférieur ou égal à 1.000°C.

6. Dispositif de fusion selon la revendication 5, **caractérisé en ce que** le ou les substances à activité réductrice contiennent des substances inorganiques et/ou organiques.

7. Dispositif de fusion selon la revendication 6, **caractérisé en ce que**, la ou les substances organiques à activité réductrice, sont des substances choisies dans le groupe comprenant les huiles, les alcools, les alcoolates de métaux et/ou les cires.

8. Dispositif de fusion selon la revendication 5, **caractérisé en ce que** le métal est de l'aluminium ou de l'étain.
